# EUROPEAN PATENT APPLICATION

(11) **EP 2 602 969 A1**
(43) Date of publication of application: **12.06.2013**
(21) Application number: 13158418.7
(22) Date of filing: 10.12.2003
(51) Int. Cl.: H04L 29/06, H04N 7/173

(54) **Method and system for creating/transmitting multimedia contents**

(30) Priority: 07.04.2003 KR 20030021734
(62) Divisional of application: 03816619.5
(71) Applicant: SK Planet Co., Ltd., Seoul 100-844 (KR); Entosys, Geumchon-gu Seoul 153-708 (KR)
(72) Inventor: Lee, Myung-Sung, 135-857 Seoul (KR); Park, Keon-Hwa, 427-050 Gyeonggi-do, Gwacheon-si (KR)
(74) Representative: Barth, Stephan Manuel

(57) **Abstract**

The invention provides a method of creating and transmitting multimedia contents which include a multimedia content producing/management Server which can be connected with transmitting and receiving terminals through wire or wireless communication networks, comprising the steps of:
providing at least one multimedia content (hereinafter "content") source;
a) attaching a designated code to the at least one source content provided by the step a);
b) providing a production option of for the content by a transmitting terminal;
c) creating construction controlling codes corresponding to the production option provided in the step c);
d) creating an integrated code by combining a source content designating code corresponding to the at least one source content of step b) with the constitution controlling code created by step d);
e) creating an integrated content according to the integrated code and storing it after encoding it;
f) checking a class of the receiving/regenerating capacity (RSC) of the receiving terminal, wherein the RSC of the receiving terminal is granted according to at least one Classification Standard, and the at least one Classification Standard comprises at least one among the receiving capability, regenerating capability and request level of the receiving terminal; and
g) transmitting the part of the integrated content which has been encoded according to the predetermined transmitting level and procedure of the checked RSC.

## Description

### TECHNICAL FIELD

The present invention relates to a method and system of creating and transmitting multimedia contents through communication networks.

### BACKGROUND ART

The method and system for providing multimedia content service based on the communication system through a very-high speed Internet wire communication network or through a wireless communication network such as IMT 2000 are being noted. In particular, the embodiment of the functions of transmitting/receiving photo images and/or moving images and providing and receiving music files such as MP3 files has been added to terminals or connected to external apparatus in a simple cellular phone, which had been used only for transmitting and receiving voice and texts through the IMT 2000 terminal. Now, the technical basis is prepared whereby the consumers can create multimedia content files by themselves and transmit and receive them over the wireless communication network overcoming the time and spatial limits. In this connection, there are several examples of representative prior arts as follows.

Korean Patent No. 10-031154 (Application No. 10-1999-0043240), which was laid-open on May 7, 2001 and registered on September 25, 2001, discloses a method of providing services by inserting multimedia contents comprising voice, music (or music video) during visual telephoning, sentences for the purpose of advertising a product of a certain company, images, sound clips, advertisement images and voices such as photo images, moving images and so on, thereby providing opportunities of advertisement to advertisers and reducing communication service rates for general users. However, this method does not make it possible to freely transmit a consumer's multimedia content to another consumer when the consumers are not on the line, because it inserts the predetermined advertisement content only when consumers are in vocal and visual telephoning.

Korean Patent No. 10-0365862 (Application No. 10-1999-0055430), which was laid-open on July 2, 2001 and registered on December 10, 2002, discloses a method of embodying the function of music video in which, while music or melody is being provided according to incoming call, a portable moving wireless terminal indicates images relating thereto. However, although this method embodies the multimedia function by showing predetermined images simultaneously according to incoming call, it does not enable a consumer to make a multimedia file by himself/herself and transmit it to another consumer.

Korean Patent No. 2002-0059194 (Application No. 10-2001-0000186), which was laid-open on July 12, 2002, discloses a device for enabling a consumer to create a music video as a multimedia content file. In other words, it discloses a device for combining texts, photo images and/or moving images and music files together according to the created design contents stored in a story board to create moving files which are the final music video files. However, it does not present any method enabling to transmit/receive and regenerate data through communication terminals (PDA or PC installing an IMT-2000 terminal and wireless transmitting/receiving function) between each consumers through wire and wireless communication networks.

Also, in order to transmit and receive the multimedia moving image files, which have been created by the aforesaid method, between consumers through the wire/wireless communication networks, the technology is needed in that a transmitting party should effectively compress and encode various signals (text, image, music and so on) having different characteristics and a receiving party should regenerate them. Further, since moving files have much information quantity, when they are compressed, encoded and transmitted, consumers need to pay expensive communication rates and communication networks become overloaded frequently. In particular, it is also needed to resolve the problem of creating considerable burden to memory capacity of receiving party terminal in downloading, storing and regenerating moving images in wireless communication terminals.

Therefore, the method and system of providing multimedia content services, which enable consumers to create multimedia content files by themselves through the multimedia content creating functions installed in or connected to a PC or a moving communication terminal, to transmit them to other consumers, to easily receive and regenerate the multimedia content files through the receiving terminals, and to make receiving party feels as he/she is appreciating moving images although transmitting party creates and transmits multimedia content files only with photo image files.

### DISCLOSURE OF INVENTION

Under the aforementioned circumstances, the present invention intends to provide a method and a system for enabling consumers to create multimedia contents by themselves and transmitting them through wire/wireless communication networks.

Another purpose of the present invention is to provide a method and a system for creating and transmitting multimedia contents which enable to receive multimedia content files and regenerate them in receiving terminals.

Another purpose of the present invention is to provide a method and a system for creating and transmitting multimedia content, which enables a receiving part to feel like anticipating a moving file, although a transmitting party creates and transmits multimedia content files only with photo image files.

Another purpose of the present invention is to provide a method and a system for creating and transmitting multimedia content which is capable of creating, editing, converting, transferring and receiving/regenerating of various multimedia content files corresponding to various types of terminals of transmitting party and/or receiving party.

In order to achieve the aforesaid purposes according to a first point of view, the method of creating and transmitting multimedia contents comprising a transmitting terminal, a receiving terminal and a server for creating and managing multimedia content which is connectable through wire/wireless communication networks, characterized by the steps of:
a) receiving multimedia contents (hereinafter "content") constructing instruction through communication networks;
b) creating a content according to the multimedia content constructing instruction; and
c) encoding the content created by the step b) and providing the encoded content to the receiving terminal through the communication networks.

According to a second point of view of the present invention, the method of creating and transmitting multimedia content comprising a transmitting terminal, a receiving terminal and a server for creating and managing multimedia content, which are connected to each other through communication networks, characterized by the steps of:
a) guaranteeing at least one multimedia content (hereinafter "content") source; b) securing a designated code to the at least one source content guaranteed by the step a); c) determining the production option of the content through the transmitting terminal; d) creating construction controlling codes corresponding to the production option determined by the step c); e) creating an integrated code by combining a source content designating code corresponding to the at least one source content determined by the step
b) with the constitution controlling code created by the step d); f) creating an integrated content according to the integrated code and storing it after encoding it; g) checking the class of the receiving/regenerating capacity (RSC) of the receiving terminal, wherein the RSC of the receiving terminal is granted according to at least one classification standard, and the at least one classification standard comprises at least one among the receiving capability, regenerating capability and request level of the receiving terminal; and h) transmitting the part of the integrated content which has been encoded according to the predetermined transmitting level and procedure of the checked RSC.

According to a third point of view of the present invention, the system of creating and transmitting multimedia contents comprising a server for creating and managing multimedia content connected through communication lines of transmitting terminals, receiving terminals and other terminals, characterized by the server for exclusive use of transmitting for providing the encoded integrated content (IMCF) to the receiving terminals through communication networks under the control of the integrated central control/management part, wherein the creating and transmitting management server comprises a source content database for storing a plurality of multimedia content (hereinafter "content") sources; a source content designating code database for storing a plurality of source content codes corresponding to each of the plurality of source contents; a server for exclusive use of content creating for creating an integrated content by extracting the source content stored in the source content database according to the content constructing instruction; and an integrated central control/management part for storing the received source content to the source content database, creating a source designating code corresponding to the received source content, storing the created source designating code to the source designating code database, and creating an encoded integrated content (IMCF) by encoding the integrated content, when the source content is received through the receiving terminals, and providing the received content constructing instruction to the server for exclusive use of content creating, when the content constructing instruction from the transmitting terminals is received through the communication networks.

### BRIEF DESCRIPTION OF THE DRAWINGS

Fig. 1 is a block diagram showing a multimedia content creating and transmitting system according to one embodiment of the present invention.
Figs. 2 and 3 are flow diagrams showing the development process of the multimedia creating and transmitting method according to one embodiment of the present invention.
Fig. 4 is a block diagram illustrating one embodiment of a terminal which can be used in a transmitting party or a receiving party illustrated in Fig. 1.
Fig. 5 is to explain one embodiment of a content created by the system illustrated in Fig. 1.
Figs. 6a to 11d are examples of page views for explaining the system illustrated in Fig. 1 and the methods illustrated in Figs. 2 and 3.
Fig. 12 is a block diagram showing the multimedia content creating system according to another embodiment of the present invention.

### BEST MODE FOR CARRYING OUT THE INVENTION

Hereinafter, we would like to explain specifically the method and system for creating and transmitting multimedia content according to exemplary embodiments of the present invention by referring to drawings attached hereto.

### <First Embodiment>

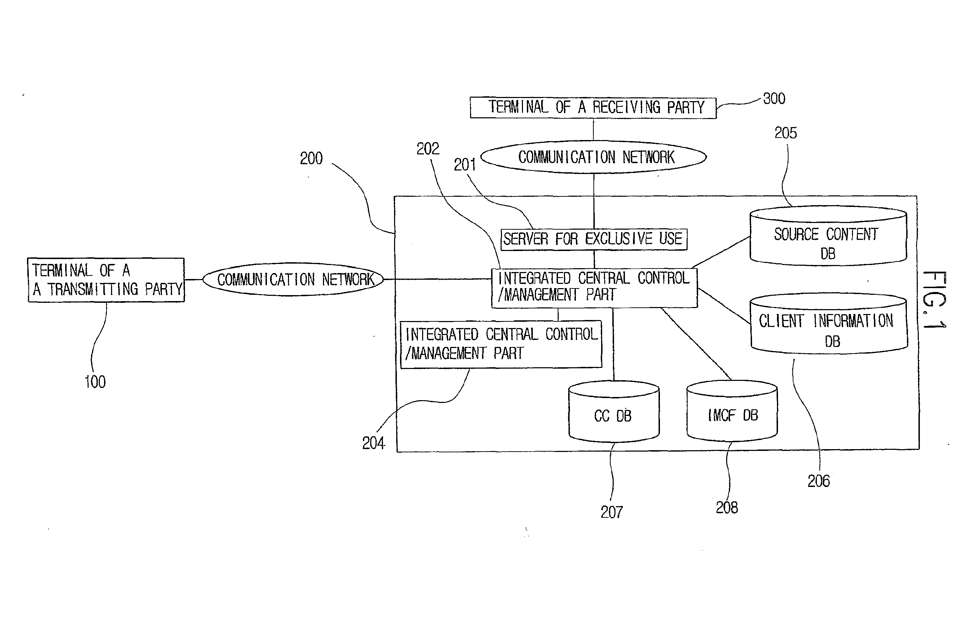

Fig. 1 is a block diagram showing a multimedia content creating and transmitting system according to one embodiment of the present invention.

Referring to Fig. 1, the system for creating and transmitting a multimedia content according to the present invention is embodied by the multimedia creating, transmitting and managing server (200) which is connected to communication networks, e.g., Internet, mobile communication network and PSTN. Business men, who operate communication networks, or service providers, who provide the multimedia service, can operate the multimedia creating, transmitting and managing server (200).

The multimedia creating, transmitting and managing server (200) creates integrated multimedia content files (IMCF; hereinafter "content files") according to the request from the terminal of a transmitting party (100; hereinafter "transmitting party") and provides the created content files (IMCF) to the terminal of a receiving terminal (300; hereinafter "receiver"). It is necessary to note that the content files (IMCF) can comprise text files (TF), moving image files (DF) and audio or moving files (MF) according to the request from the receiving party (100). When the creating, transmitting and managing multimedia server (200) receives a content constructing instruction (IC) from the transmitting party (100) connected through communication networks, it creates integrated multimedia content files (hereinafter, "content files", "integrated contents" or "IMCF") according to the content constructing instruction (IC). In addition, it provides the created content files (IMCF) to the receiving party (300). Herein, the transmitting party (100) and receiving party (300) may be respectively a moving terminal and a portable computer, e.g., PDA, notebook or personal computer.

The content constructing instruction (IC) comprises source designating instructions (TC, DC and MC) for designating at least one source contents (TF, DF and MF) in the content files (IMCF) and an attribute designating instruction (CC) for designating the connection attribute of the source contents (TF, DF and MF) which has been designated by the source designating instructions (TC, DC and MC). The content constructing instruction (IC) may be an integrated code (IC), which is a certain group of coded instructions. Thus, the content constructing instructions (IC; hereinafter "integrated code") comprise a text designating code (TC) for designating the text files (TF), a photo designating code (DC) for designating photo files (DF), or an audio or moving image designating code (MC) for designating audio or moving files (MF), and construction controlling (or, attribution designating) codes (CC) corresponding to the content files (IMCF) creating option (MCMO) or corresponding to the controlling instruction, in order to designate the combination attributions of each source content. Therefore, hereinafter, the terms "instruction" and "code" are used interchangeably for easier understanding of the present invention.

The multimedia creating, transmitting and managing server (200) stores the information of subscribers or clients of the services. For example, the multimedia creating, transmitting and managing server (200) stores the information regarding contents created by clients beforehand and information regarding the receiving party, communication cost and payment particulars. The multimedia creating, transmitting and managing server (200) stores created content files (IMCF).

The multimedia creating, transmitting and managing server (200) classifies the grade (e.g., grade of terminal capacity) of the receiving party (300). The grade of the receiving party (300) is granted according to at least one classification grade. Desirably, the at least one classification grade comprises at least one among the receiving capability, regenerating capability and request level of the multimedia contents of the receiver (300).

Meanwhile, according to an embodiment of the present invention, the multimedia creating, transmitting and managing server (200) is capable of creating the preview content files before the content files (IMCF) are created and then providing the created preview content files to the receiver (300). In addition, in response to the reply of the receiver (300) to the preview content files, the server can create the content files (IMCF) and provide all or some predetermined parts of the content files (IMCF) to the receiver (300). On the other hand, according to another embodiment of the present invention, the multimedia creating, transmitting and managing server (200) creates content files (IMCF), and then creates preview content files thereof to provide the created preview content files to the receiver (300) before providing the content files (IMCF) to the communication networks. Subsequently, according to the reply to the preview content files from the receiver (300), the server provides the content files (IMCF) to the receiver (300). The present invention is not confined to the order of creating or providing the preview content files and content files (IMCF).

Still preferably, the content files (IMCF) comprise the information regarding a transmitting party (100), title of the content files (IMCF) and explanation thereof and messages. The transmitter's information, title of the content files (IMCF) and their explanation and messages may be generated from the transmitting party (100), or can be generated from the compilation of text information files provided to the transmitter (100) from the multimedia creating, transmitting and managing server (200). On the contrary to this, the title of the content files (IMCF) and explanation thereof, and messages can be created according to the program which has been prepared in advance in the multimedia creating, transmitting and managing server (200).

Preferably, as illustrated in Fig. 1, the multimedia creating, transmitting and managing server (200) comprises a server for exclusive use (201), an integrated central control/management part (202), a server for exclusive use of content files (IMCF) (204), source content database (DB; 205), clients related information database (206), construction controlling codes (CC) database (207) and IMCF database (208).

The server for exclusive use (201) provides the content files (IMCF) to receiver (300) under the control of the integrated central control/management part (202) through the communication networks.

The source content DB (205) stores source contents prepared in advance, e.g., source contents provided by external multimedia content service providing companies as well as those which a user uploaded.

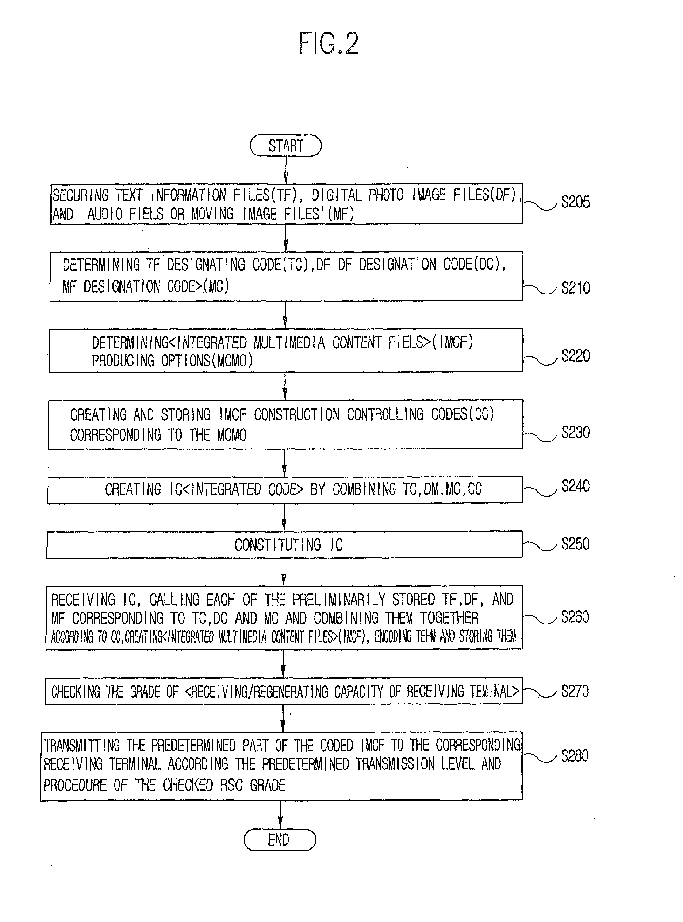

The integrated central control/management part (202) controls this system overall. The integrated central control/management part (202) provides the received content constructing instruction (IC) to the server for exclusive use of content creating (204), when the content constructing instruction (IC) is received through the content constructing instruction (IC) from the transmitter (100). Also, the integrated central control/management part (202) secures source contents (refer to the step S205 of Fig. 2). The source contents may be those stored in the source content DB(205), or may be those provided through communication networks from the transmitter (100). For example, if the source contents transmit newly secured files from the transmitter (100) to the integrated central control/management part (200) of the multimedia creating, transmitting and managing server (200), the integrated central control/management part (202) stores the new files (TF, DF or MF) at the source content DB (205), gives (i.e., determines) the corresponding source designating codes (TC, DC or MC) (refer to the step 210 of Fig. 2), and if the source designating codes (TC, DC or MC) is stored at the construction controlling codes DB (207) simultaneously of transmitting the source designating codes (TC, DC or MC) to a transmitter (100), the user of the transmitting party (100) can check them.

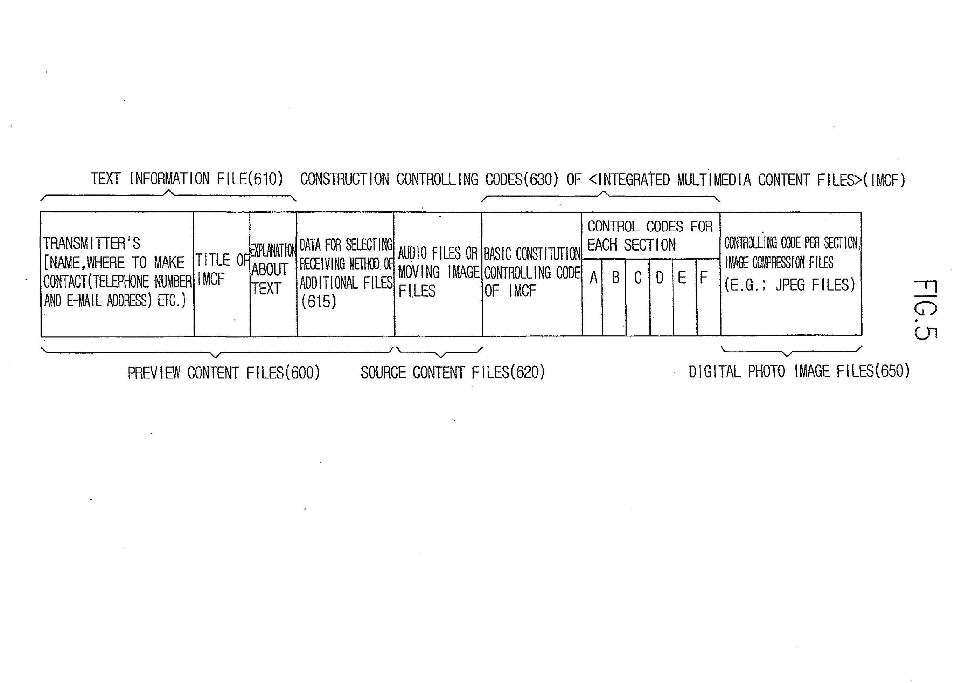

The server for exclusive use of creating IMCF (204) stores the construction controlling codes (CC) in advance, which fall under various creating options (MCMO), in the memory inside thereof, or is provided with those created by the integrated central control/management part (202) of the multimedia service management server (200) or those stored in the construction controlling codes DB (207), which have been created by the central control part (170) (refer to the step 230 of Fig. 2). The construction example of the content files (IMCF) according to the present invention is illustrated in Fig. 5. The construction of the content files (IMCF) illustrated in Fig. 5 is specifically explained hereinafter. Also, since the creation of the content programs can be easily embodied by a person skilled in the art based on the detailed description of the specification and is obvious to those skilled in the art, specific programs are not stated in the detailed description.

The central controlling part (170) creates an integrated code by combining TC, DC, MC, and CC together (refer to the step S240 of Fig. 2), and transmits the created integrated code (IC) to the integral central control/management part (202) (refer to the step 250 of Fig. 2). Then, if the integrated central control/management part (202) receives the integrated code (IC) and collects the source contents (TF, DF, and MF) corresponding to TC, DC, and MC in the IC from the source content DB (205) and provides them to the server for exclusive use of IMCF creating (204) along with the CC, the server for exclusive use of IMCF creating (204) combines the source contents together according to the CC and creates content files (IMCF).

Also, according to an alternative embodiment, the content files (IMCF) created by the server (204) for exclusive use of creating the IMCF are coded by the integrated central control/management part (202), converted to coded content files (IMCF) and can be stored in the IMCF DB (208) (refer to the step S280 of Fig. 2). In addition, in some embodiments, the central control/management part (202) can execute all of the functions of the server for exclusive use of creating IMCF, without installing the server for exclusive use of creating IMCF (204) in a device.

The client related information DB (206) stores the information of subscribers or clients of the services. For example, the client related information DB (206) stores identification information regarding clients (ID, password, telephone number, address and so on), information regarding previously created content files (IMCF), receiver's information, communication cost and payment details. The IMCF DB (208) stores the content files (IMCF), which have been created by the server for exclusive use of creating IMCF, under the control of the integrated central control/management part (202).

The integrated central control/management part (202) classifies the grade of receiving/regenerating capacity of receiver's terminal (300). The receiver's RSC grade classified by the integrated central control/management part is given to the receiver (300) according to at least one classification standard. The at least one classification comprises at least one among the receiving capacity, regenerating capacity and request level of the receiver (300).

In order to check and classify the receiver (300)'s grade, the integrated central control/management part (202) gives and takes appropriate check signals with the receiver's terminal (300) designated by the receiver (100) and checks the RSC grade of the receiver's terminal (300) by referring to the kinds and capacity related information of the receiver's terminal (300) (refer to the step S270 of Fig. 2). In this case, when the information related to the kinds and capacity of the receiver's terminal (300) is registered in the client related information DB (206) in advance, the information will be referred to.

Examples of the RSC grade of the receiver's terminal (300) are as follows:
A) Grade being capable of receiving/regenerating every kind of content files (IMCF);
B) Grade being capable of receiving/regenerating only <text information files and moving image files> among the content files (IMCF);
C) Grade being capable of receiving/regenerating only <text information files and audio files> among the content files (IMCF);
D) Grade being capable of receiving/regenerating only <text information files> among the content files (IMCF); and
E) Grade supporting so called SMIL standard.

The integrated central control/management part (202) provides all or part of the coded IMCF according to the predetermined transmission level and procedure according to the grades through the server for exclusive use (201) to the receiver (300).

The integrated central control/management part (202) allows the server for exclusive use of creating IMCF (204) to create preview content files (e.g.: 600 of Fig. 5) [e.g., text information file (610 of Fig. 5) + data guiding the receiving method of additional files (615 of Fig. 5)] before transmitting coded content files (IMCF) to the receiver (300), codes them to create coded preview content files, transmits them to the receiver, and provides coded content files (IMCF) to the receiver according to the reply of the receiver (300), e.g., service request.

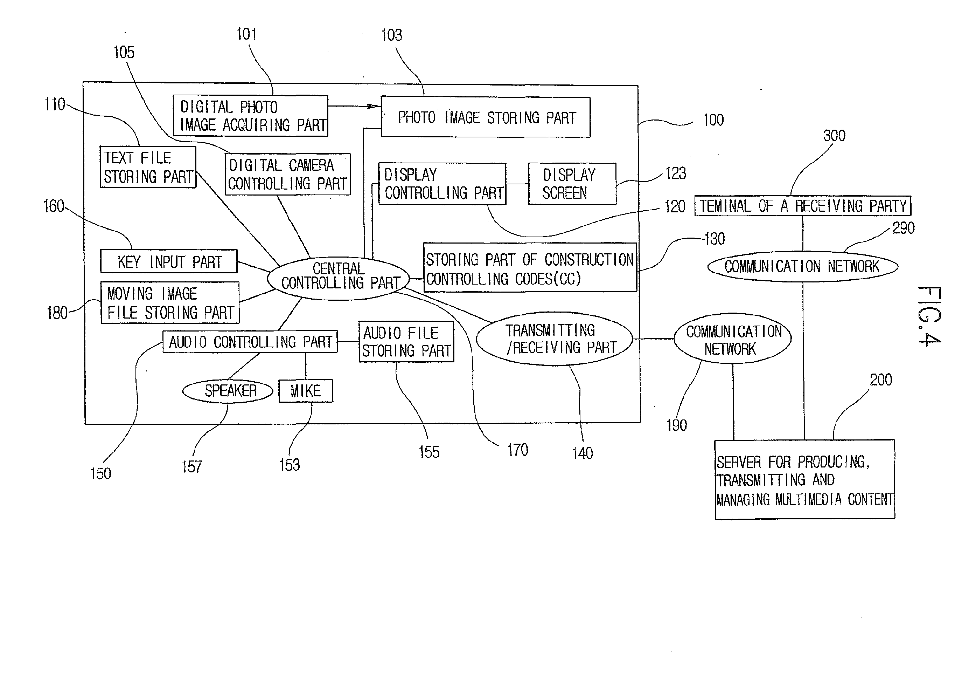

Examples of detailed constitution of the terminals (100, 300) which can be used for the transmitter's terminal (100) or for the receiver's terminal (300) are illustrated in Fig. 4.

Referring to Fig. 4, terminals (100, 300) comprise a plurality of storing parts (110, 103, 155, 180, 130) for storing text files (TF), photo image files (DF), audio (music) or moving image files (MF), and controlling codes (CC). The terminals (100, 300) can show files stored in a plurality of storing parts (110, 103, 155, 180, 130) on a display (120, 123) according to the control of the central controlling part (170), and can output them through a speaker (157). The central controlling part (170) can interact with the server for multimedia creating, transmitting and managing through a transmitting/receiving part (140).

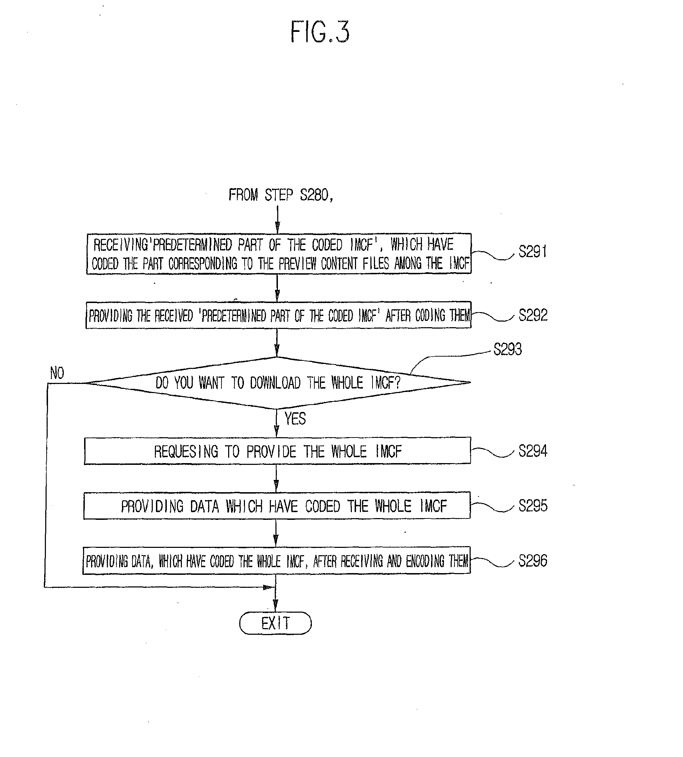

Figs. 2 and 3 are flow diagrams showing the development process of multimedia content creating and transmitting according to an embodiment of the present invention.

Hereinafter, we will provide detailed explanation about the development process of the multimedia creating and transmitting method by referring to the drawings attached hereto.

Firstly, in the step S205, when the user of the receiving party connects to the service system through the communication networks using his/her terminal (e.g.: 100) of the user of the transmitting party, the integrated central control/management part (202) provides selecting and guiding data concerned with the content construction to the transmitter (100), and the user newly acquires them and transmits them to the creating, transmitting and managing multimedia server (200), or selects the source contents which are stored in the creating, transmitting and managing multimedia server (200) in advance, thereby securing source contents to be comprised in IMCF (S205).

For example, as illustrated in Fig. 5, the text information file (TF) necessarily comprises transmitter's information and title of the IMCF to be prepared, and may further comprise the text message content (i.e., text explanation content) depending on the selection. It is common that the user inputs title and content of message through the key input part (16) of terminal (100), and text data are stored in the storing part of text data of terminal (100). However, in some embodiments, the text information files may be the ones, which have downloaded previously stored text information files and have been edited by themselves and stored in the text file storing part (110), or may be the ones stored in the source content DB (205) of the creating, transmitting and managing multimedia server (200) in advance. Also, the text information files may be the ones receiving what other users transmitted and stored in the text information file storing part (110).

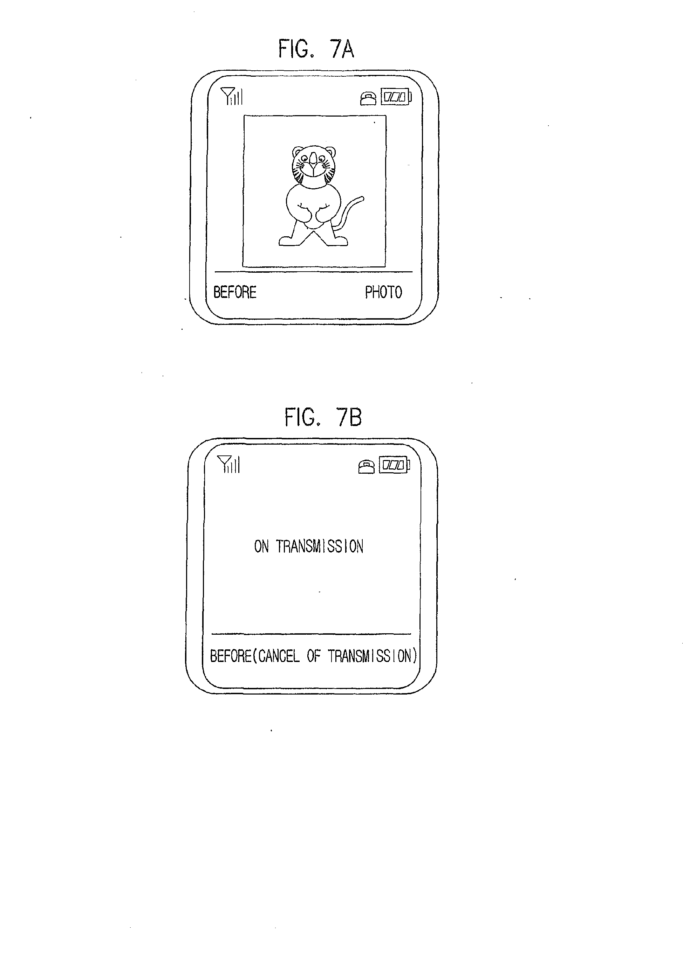

Usually, the digital photo image files (DF), as illustrated in Fig. 7a, are image files which are compressed and coded in a method of JPEG GIF or other method. As another embodiment, the photo image files (DF) are generally acquired by a user with a digital camera. For example, they are usually acquired by the digital image acquiring part (101) as CCD device and stored in the photo image storing part (103) according to the manipulation signal of the use, under the control of digital camera controlling part (105). However, it should be noted that according to some embodiments, only digital photo image storing part (103) is installed in the transmitting terminal (100), but digital photo image acquiring part (101) such as a digital camera controlling part (105) and a digital camera are not installed. In this case, they may be photo image files stored in the source content DB (205) of the server for creating, transmitting and managing multimedia (200), or may be photo image files stored in the photo image file storing part (103) after being downloaded and edited. Also, they may be the ones received from other users and stored in the photo image file storing part (103). Hereinafter, detailed explanation of the examples of the development process of securing the photo image files (DF) by referring to the drawings attached hereto will be provided.

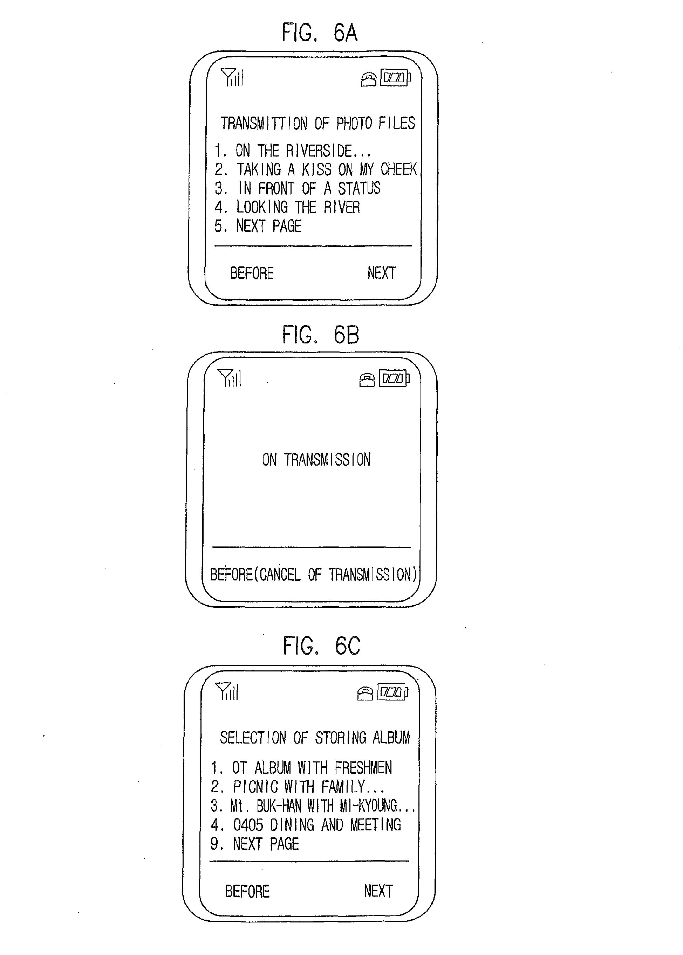

First of all, explanation about the photo image files (DF), which are stored in the transmitter's terminal (100) (i.e., the ones which have been stored previously or the ones stored by being received from the server for creating, transmitting and managing multimedia (200)) will be provided. As illustrated in Fig. 6a, if one of a plurality selection items of photo images or moving images is selected in order for the transmitter (100) to transmit photo image or moving image files (DF, MF) stored in the terminal (100), the selected item, as illustrated in Fig. 6b, the server for creating, transmitting and managing multimedia (200) is provided through communication networks. Then, the server for creating, transmitting and managing multimedia (200) stores the received photo image files (DF) at the position selected by the user (100), while providing a guiding menu, as illustrated in Fig. 6c.

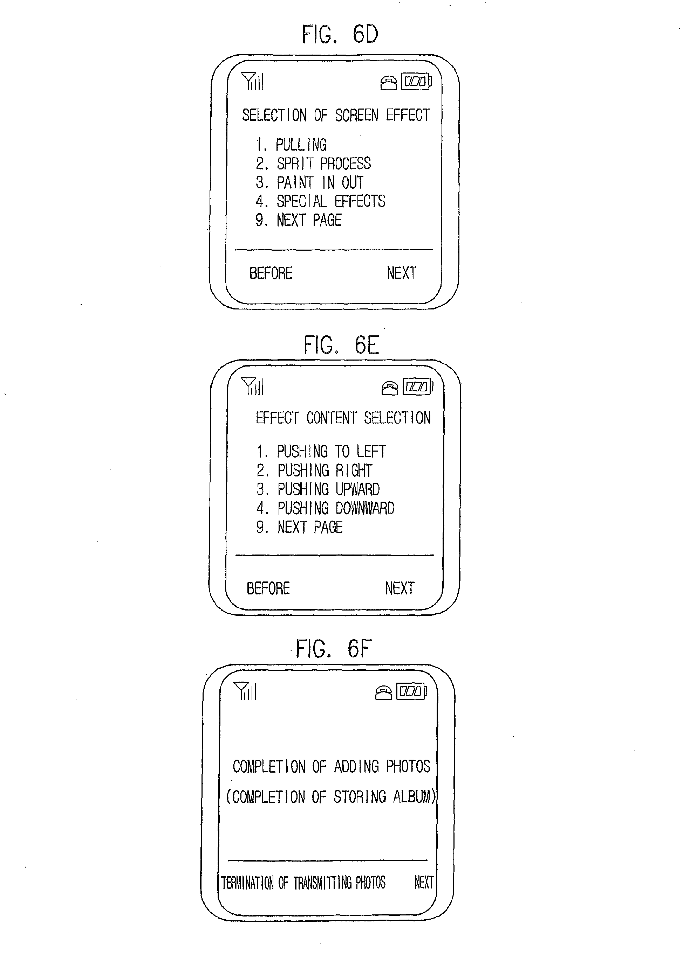

Subsequently, the server for creating, transmitting and managing multimedia (200), as illustrate in Fig. 6d, provides a screen effect selection page, which can select the screen effect of the stored photo image or moving files (DF, MF), to the transmitter. If the user of the transmitter (100) selects one of the plurality of screen effect selection items, the server for transmitting and managing multimedia (200) provides the effect content selection page in response to the selection to the transmitter (100), as illustrated in Fig. 6e. If the user selects one of the plurality of effect content selection items comprised in the effect content selection page, the selected item is stored and a page informing the security of photo images or moving files (DF, MF), as illustrated in Fig. 6f, is provided to the transmitter (100) and the process of securing photo images or moving files (DF, MF) is completed.

As illustrated in Figs. 7a ∼ 7f, if the photo image files (DF), which have been photographed immediately, are transmitted, the photo image files (DF) are provided to the server for creating, transmitting and managing multimedia (200) through communication networks. Also, if the user of the transmitter (100) selects or inputs the title and storage location, the server for creating, transmitting and managing multimedia (200) stores photo image files (DF) at the location selected and inputted by the user.

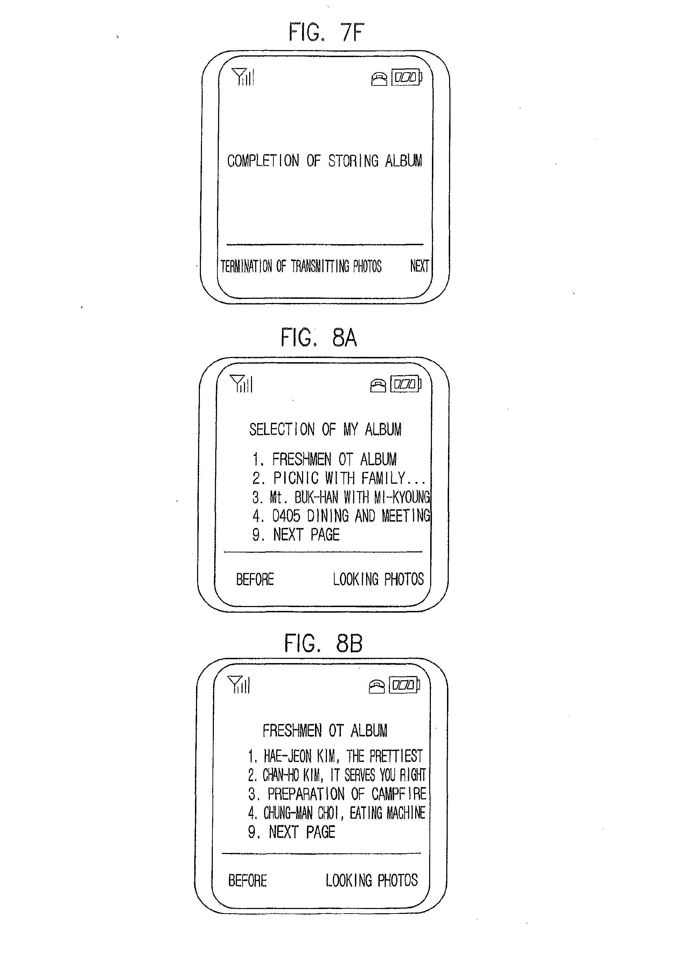

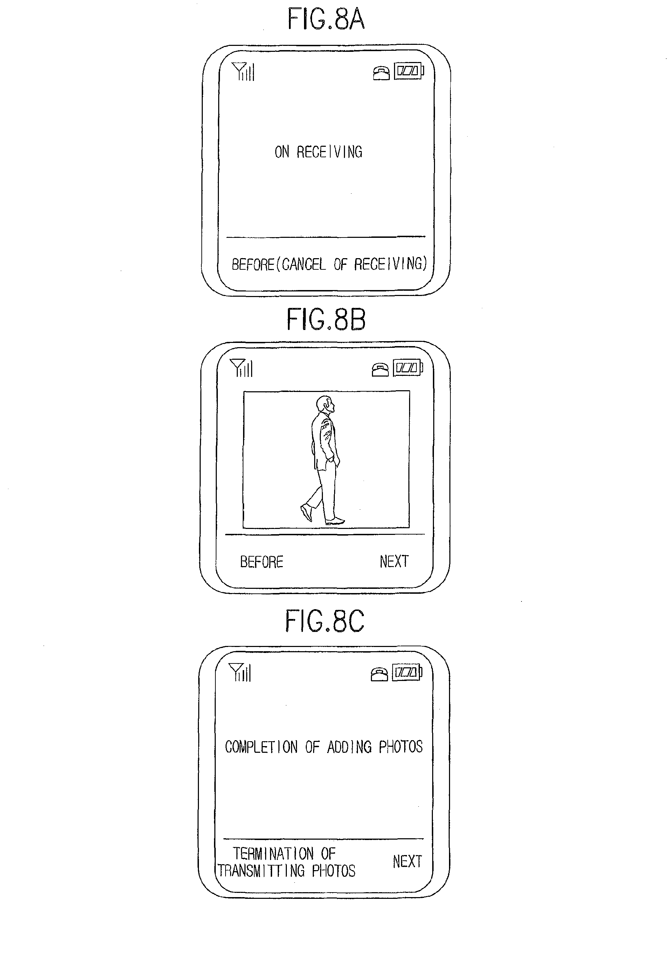

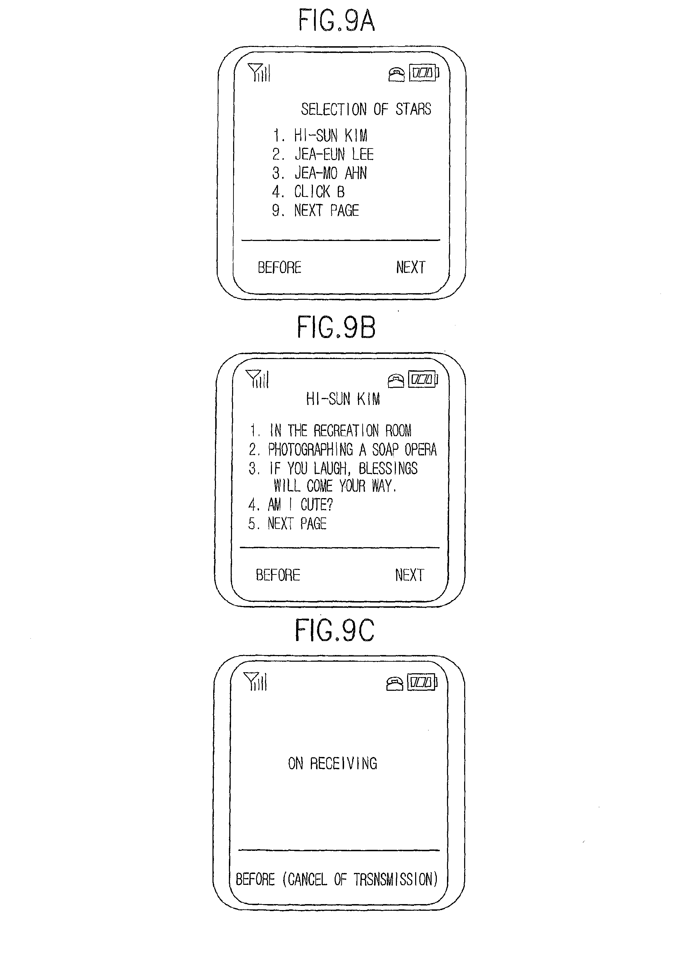

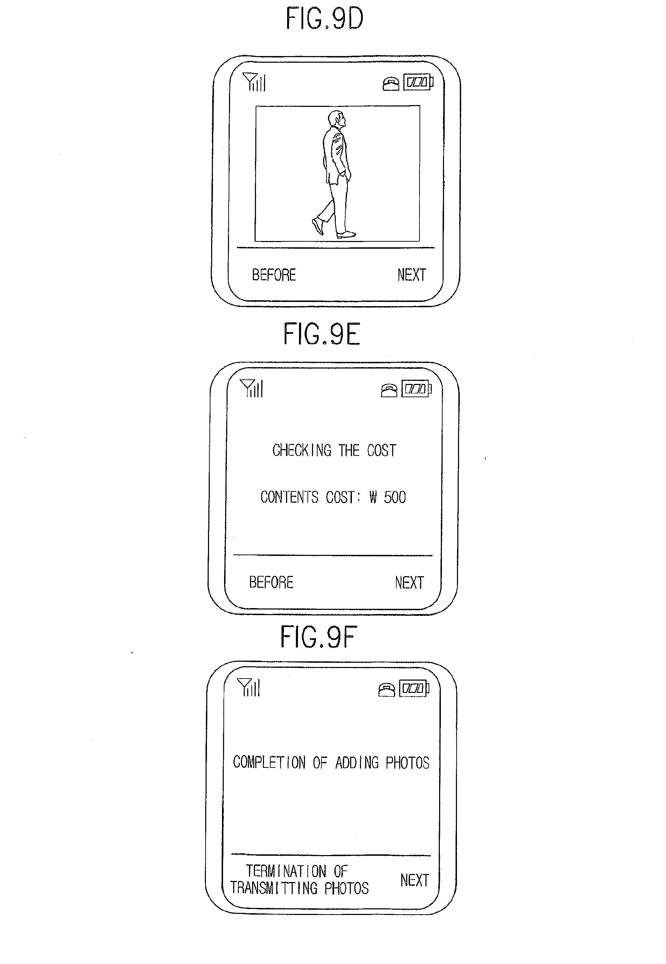

If sources are selected from the contents stored in the source content DB (205), the user, as illustrated in Figs. 8a ∼ 8e, can determine photo image files (DF) by selecting the items corresponding to the source contents. Similarly, the photo image files can be provided to the public with fee. As illustrated in Figs. 9a∼9f, the user of the transmitting party (100) selects the photo image files with fee, so that he/she can secure the photo image files (DF).

Regarding "audio files or moving files (MF)", the audio files contain human's voice, sounds of nature, artificial songs or musical performances and so on. They are generally stored in the form of MP3 file or wave file. The moving files are normally compressed with MPEG method. The audio files are normally acquired through a mike (153) under the control of the audio controlling part (150) of the transmitter (100) according to the user's manipulation signal, and stored in the audio file storing part (155).

However, in some embodiments, the audio files may be the ones downloaded, edited as they are, which have been previously stored in the corresponding storage space [e.g., source content DB (205)] of the server for creating, transmitting and managing multimedia (200), and stored in the audio file storing part (155). Also, they may be the ones stored in the audio file storing part (155) after receiving what the other user transmitted.

Herein, moving images mean audio files or comprise audio files, so they are used as such in the following detailed description and claims. In other words, a moving image without audio is not desirable.

In addition, it should be noted that the terminal (100) does not necessarily require the moving file storing part (180) to apply the present invention, and it may comprise the moving file storing part (180) according to selection. In other words, it needs considerable costs and loads on the communication lines to store or transmit/receive moving images for the present invention. Thus, it should be noted that it is not necessary to comprise a moving image acquiring device in the terminal (100) and further, an audio file instead of a moving file can be used as a background content file of the multimedia content files.

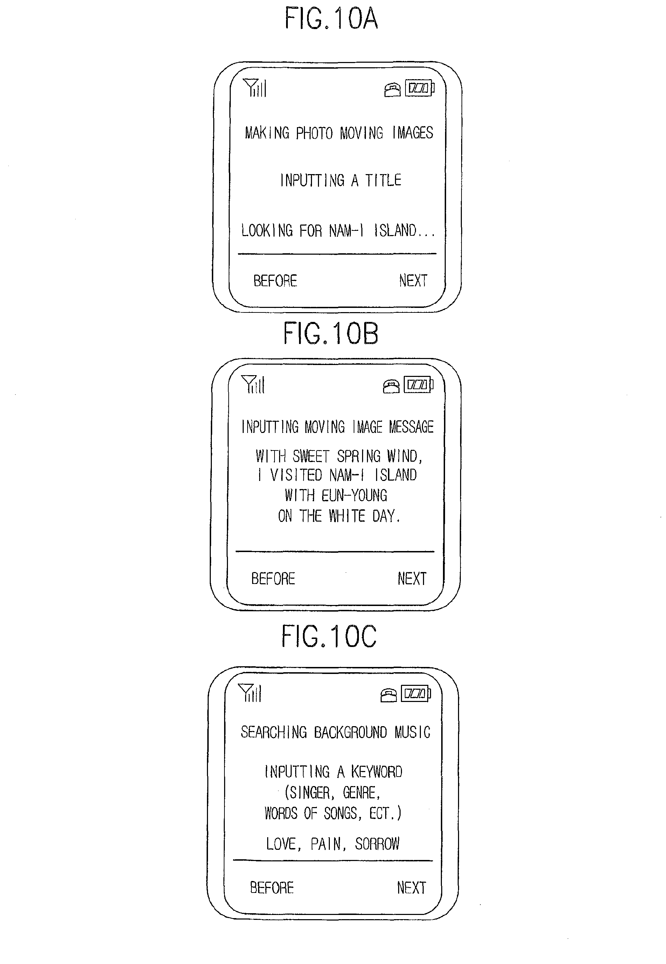

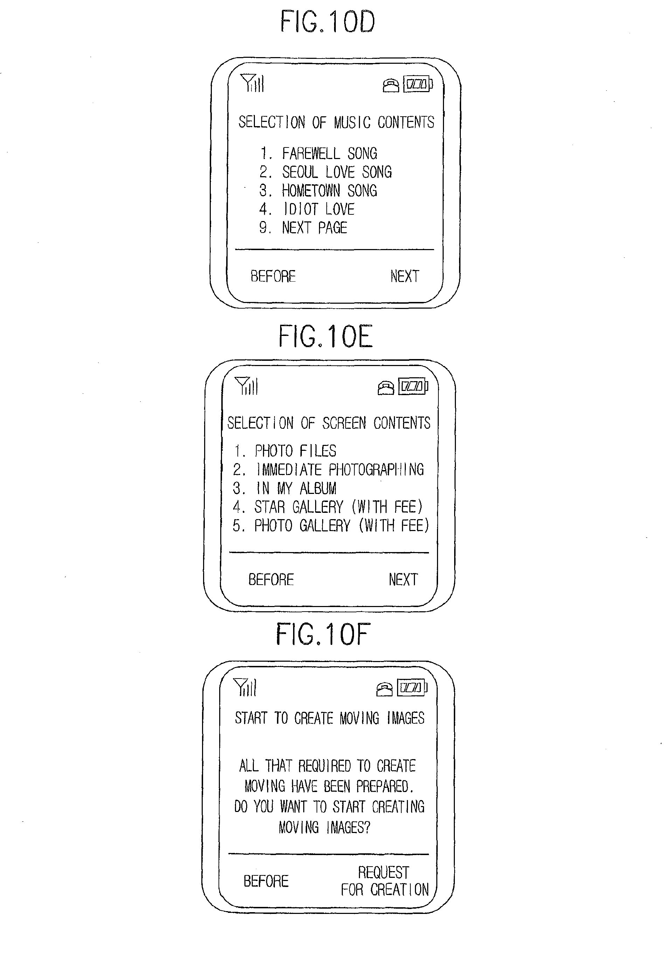

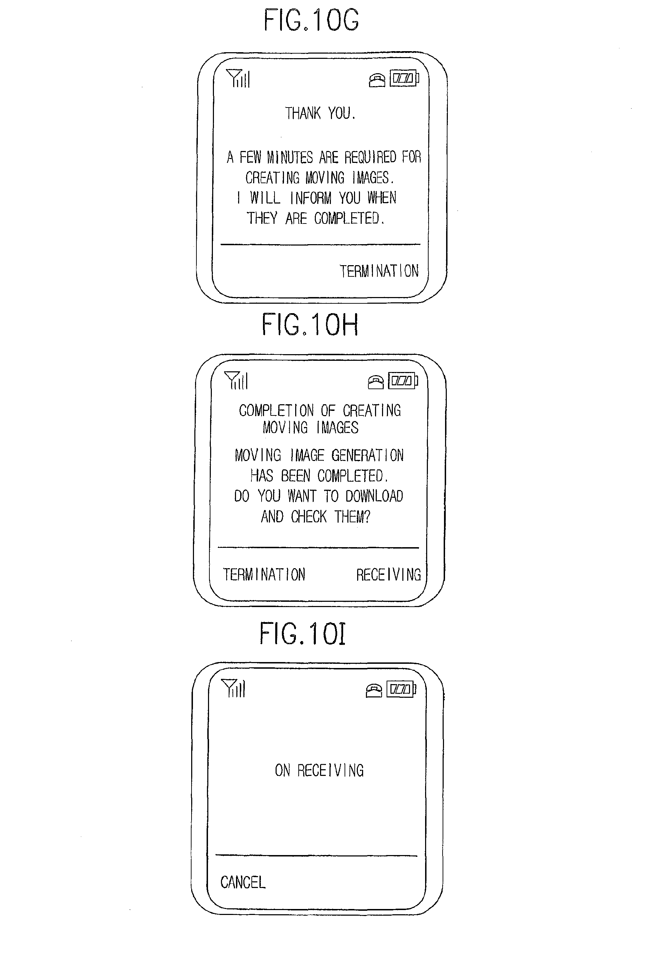

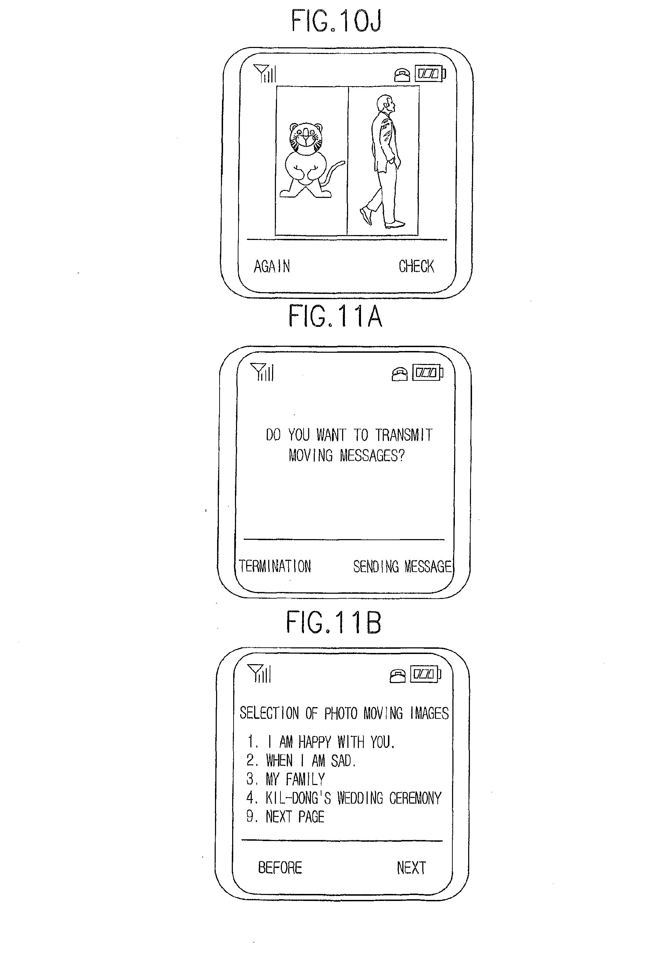

An example of the process of creating the aforesaid IMCF (expressed as "moving image files" in the example) will be explained by referring to Figs. 10a∼10k hereinafter. If the user of the transmitting party (100) selects making moving image files, as illustrated in Fig. 10a, a title input page comprising a window for inputting the title of IMCF to be created by the transmitting party (100) is provided to the transmitting party (100). If the user inputs the title into the title input page, the server for creating, transmitting and managing multimedia (200) provides a moving message input page to the transmitter (100), as illustrated in Fig. 10b. If the user inputs a message into the moving image message input page, the server for creating, transmitting and managing multimedia (200) provides a background music searching page, with which music or moving images used for the background of IMCF to be create can be searched, to the transmitter (100), as illustrated in Fig. 10c. If the user of the transmitter (100) inputs a keyword of music, which he/she desire, to the background music searching page, the server for creating, transmitting and managing multimedia (200) provides a music content selection page comprising a list of music corresponding to the keyword, as illustrated in Fig. 10d, to the transmitter (100). If the user of the transmitting party (100) selects music in the music list of the music content selection page, the server for creating, transmitting and managing multimedia (200) stores the selected music file. Also, as illustrated in Fig. 10e, an image selection page, which admits the user to select the image source content, is provided to the transmitter (100). If the image source content is selected through the image content selection page, the server for creating, transmitting and managing multimedia (200) creates data guiding the process of creating moving images, as illustrated in Figs. 10a∼10i and provides them to the transmitter (100). Then, the server for creating, transmitting and managing multimedia (200) provides the created moving images to the transmitter (100), as illustrated in Figs. 10j and 10k and admits the user of the transmitting party (100) to check the image files (MF) regenerated by the display controlling part (120) through a display screen (123).

Subsequently, in the step S210, a working for determining designating instructions (or codes) TC, DC and MC, which respectively designate TF, DF and MF secured in the step S205 of the server for creating, transmitting and managing multimedia (200) is carried out. They can be obtained automatically, if the corresponding files and designating codes thereof are already stored in the source content DB (205) and construction controlling codes DB (207) of the server for creating, transmitting and managing multimedia (200). Also, if the user newly acquires a file, the transmitting terminal of the user sends it to the server for creating, transmitting and managing multimedia (200), and the integrated central control/management part (202) stores the new file at the source content DB (205). Also, it grants a designating code thereof, and stores it at the construction controlling codes DB (207). At the same time, the designating code is transmitted to the transmitting terminal (100) of the user so that the user can check and secure it. Meanwhile, it should be noted that the source content DB (205) is not only uploaded by the user, but is also generally provided by external companies who provide contents services.

In step S220, the server for creating, transmitting and managing multimedia (200) carries out the process of determining integrated multimedia content files (IMCF) by creating options (MCMO) regarding how to combine the TF, DF or MF together, which have been designated in the step S210. The process may automatically determine <production option> by the user selecting one of the option menu which is prepared in advance in the design of the multimedia content creating and transmitting system, and may let the <production option> to determine by editing the input of the user.

The working for determining the production option can be carried out by the user by selecting the <production option> related menu displayed on a display screen (123) through the key input part (160), e.g., under the control of the display controlling part (120) of the terminal (100). Herein, the display screen (123) controlled by the display controlling part (120) may be, for example, an LCD window if the transmitting terminal (100) is a cellular phone or PDA, and a CRT monitor or LCD screen if the transmitting terminal (100) is a PC or digital TV. It executes overall display functions of displaying overall key manipulating menu by the user, or providing a screen showing all or a part of the production process of the integrated multimedia content file (IMCF) or finishing point.

A person skilled in the art can easily understand that the central controlling part (170) of the terminal (100) can store and use previously promised protocol, overall information provided by service companies and various prepared production option information in the multimedia content service system in the memory inside (non-illustrated), thereby a necessary controlling action can be properly embodied. Also, the <production option> can have <designation of representative screen, control of the time length (ML) of moving images or audio files according to the text scroll speed (TLD) and regulations on ML and TLD>.

Specific example thereof is as follows:
1) Designating one of representative screens (RP) among digital photo images.
2) In scrolling and showing text information on the screen of the terminal of the receiving party according to the predetermined speed, if the time length of moving images of integrated multimedia content files (IMCF) or audio files is too short to scroll all of the text information, the moving image or audio files are repeated again so that all the text information can be scrolled. For example, if the regeneration (time) length of the text file (message) in the integrated multimedia content file (IMCF) is TL, the (time) length of selected music files or moving image files is ML, and the (time) length of regeneration of the constructing option is DL, the most largest value of length among the 3 (time) lengths being regenerated. If TL is short, it plays to the end without text scroll. If ML is short, it replays music files and moving image files from the beginning. If DL is short, it also plays to the end in the manner of repeating the regeneration of photo images and constructing option from the beginning.
3) Inserting the title of the integrated multimedia content files (IMCF) into the predetermined position of the terminal of the receiving party and constructing the first screen to show <from Mr./Ms. OOO, *** titled message has arrived to you>, and if the user checks it, explanation thereof is provided.
4) After text explanation is provided, data guiding the selection of the receiving method of additional files (e.g., preview, download etc.) are provided. It can also contain simple sampling contents of IMCF such as 'representative image (photo screen) with music for about 3 seconds' or 'moving image for about 5 seconds'.
5) If a download menu is selected by the user, photo images are sequentially displayed in the predetermined order (e.g., if the number of photos is less than 3, it shows each one for 30 seconds at the longest, and repeatedly shows them sequentially).
6) The display method of the photo image, which has been predetermined, applies as a predetermined effect, e.g., the effect of twirling appearance from the left corner to the central part of the existing screen with size getting bigger or pushing the previous screen gradually.
7) Meanwhile, the text explanation content may be in the form of each photo screen or may be in the form of a poem or other writing. The content shows the explanation by inserting it onto the photo image (all or part) by constituting photo screen and another screen according to the predetermined method.

Based on the aforesaid explanation about <production option>, a person skilled in the art can sufficiently embody the production option variously within the extent that the condition on the hardware system or service protocol allows. Thus, no further explanation about another example of <production option> will be provided. As explained hereinafter, integrated multimedia content files (IMCF) are created according to a desirable embodiment, as illustrated in Fig. 5, according to the aforesaid production option.

In step S230, the construction controlling codes corresponding to the production option (MCMO) are created (S230). The construction controlling codes (CC) are created according to the option selection of the user by the central controlling part (170) of the terminal (100), stored in the construction controlling codes storing part (130), and can be provided to the integrated central controlling/managing part (20) of the server for managing multimedia service (200). For example, the central controlling part (150) stores CC corresponding to various production options in advance or is provided with the CC from the integrated central controlling part (202) of the server for managing multimedia service, and can create the CC according to the predetermined programs. Regarding this, a person skilled in the art can easily embody it, so no further explanation thereof will be provided.

The control code (CC) indicated with reference number "630" in Fig. 5 comprises a control code per section in addition to the basic constitution controlling code of the integrated multimedia content files (IMCF). Herein, section means a length providing a photo image. Detailed constitution methods of each section may be different from each other. Thus, Fig. 6 exemplifies control codes of each section as A∼F. Particularly, with this method, when the transmitter produces and transmits multimedia content files only with photo image files, the receiver can obtain the effect of appreciating moving images.

In step S240, the central controlling part (150) or integrated central controlling/managing part (202) creates an integrated code (IC) by combining the TC, DC, MC, and CC together.

In step S250, for example, the central controlling part (150) provides the integrated code (IC) to the integrated central controlling/managing part (202) of the server for managing multimedia service through the transmitting/receiving part (140) and communication networks (190). A person can easily understand that if the integrated code (IC) is created in the integrated central control/management part (202) of the server for managing multimedia service in another embodiment, the step S250 can be omitted.

In step S260, the integrated central controlling/managing part (202) in the server for creating, transmitting and managing multimedia (200) receives the integrated code (IC) and calls each of TF, DF and MF, which are stored in the source content DB (205) corresponding to TC, DC, and MC and provides them to the server for exclusive use of creating the IMCF. Meanwhile, the server for exclusive use of producing the IMCF (204) combines TF, DF, and MF together according to CC to create content files (IMCF), and the integrated central controlling/managing part (202) receives them and codes them. The coded content files (IMCF) are stored in the IMCF DB (208).

In step S270, the integrated central controlling/managing part (202) communicates proper checking signals with the receiving terminal (300) of the receiving party (300) designated by the transmitting party (100), and checks the grade of multimedia receiving/regenerating capacity (RSC) of the receiving terminal (300) by referring to the information of kinds and capacity related information of the receiving terminal (300). At this time, if the information regarding the kinds and capacity related information of the receiver's terminal (300) is registered in advance in the client related information DB (206) (or in the integrated central control/management part (202)), the information will be referred to.

In step S280, a given part (all or part) of the IMCF coded according to the transmission level and procedure of the checked RSC grade is transmitted to the receiver's terminal (300) by the server for exclusive use (201), if an integrated central control/management part (202) (or server for exclusive use (201)) in the server for creating, transmitting and managing multimedia (200) exists. For example, (the integrated central control managing/controlling part (202)) the server for creating, transmitting and managing multimedia (200) stores in advance <predetermined coded part of the IMCF> corresponding to the RSC grade (e.g.: A∼E of 4∼5> and < predetermined coded part of the IMCF> corresponding to the "text information file + guiding data selecting the method of additional files> as "preview content files" (e.g., in the server for exclusive use of producing IMCF). It should be also noted that the <predetermined coded part of the IMCF> corresponding to the preview content files is transmitted irrelevant to the RSC grade of the transmitter (300), and the <predetermined coded part of the IMCF> according to the grade of the terminal of the transmitting party (or the service requesting level from the terminal of the transmitting party) can be provided.

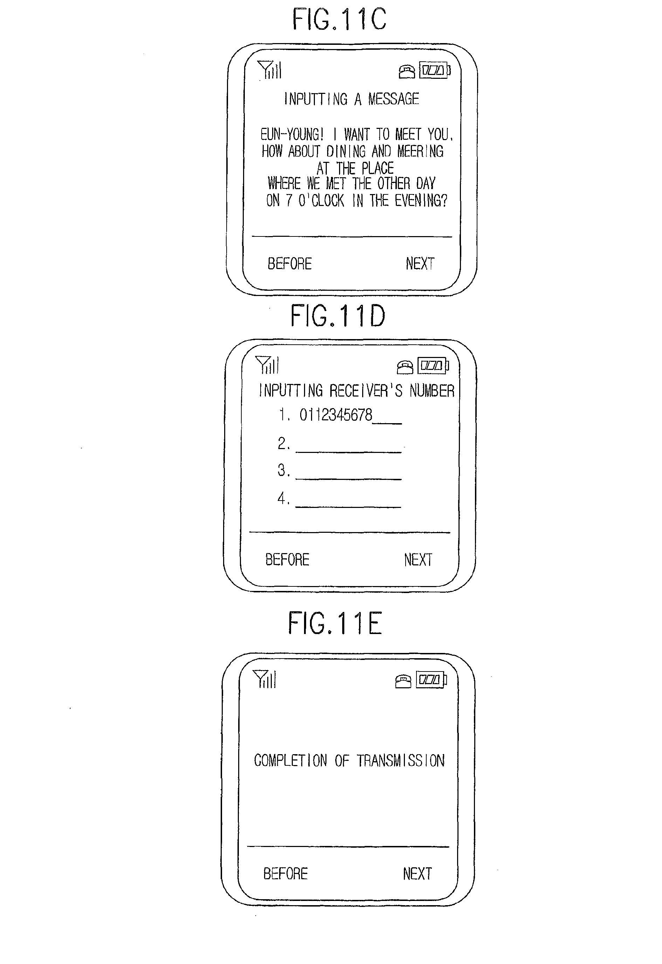

Explanation about one example of the process transmitting the IMCF created/stored by the aforesaid steps S205∼S260 or the <predetermined part of the coded IMCF> by referring to Figs. 11a∼11d is as follows. When the user connects to the server for creating, transmitting and managing multimedia (200) in order to transmit the content files (IMCF), which are produced and prepared by the user in advance, the server for creating, transmitting and managing multimedia (200), as illustrated in Fig. 11a, provides a page for selecting a photo moving image which is a kind of the IMCF to the transmitter (100) and managing multimedia (200). If the user using the transmitter (100) selects the items of the source contents, which he/she wants, among the moving image selection pages having the items corresponding to the IMCF secured by the moving image list comprised in the moving image selection page, i.e., by the steps S205∼S270, the server for creating, transmitting and managing multimedia (200) in response to the selection temporarily stores the selected IMCF in the memory, and the transmitter (100) may provide a message input page having a message input window, as illustrated in Fig. 11b.

If the user using the transmitter (100) inputs his/her desirable message into the message input window, the server for creating, transmitting and managing multimedia (200) stores the message, while providing the address of the receiving party (300) to receive the message, e.g., a wire/wireless telephone number and an address input page having an address input window for inputting e-mail address or IP address to the transmitting party (100). If the transmitting party (100) inputs the address of the receiving party (300), the server for creating, transmitting and managing multimedia (200) creates the content files (IMCF) based on the selected IMCF and the inputted message, and transmits them to the address.

Hereinafter, referring to Fig. 3, the response according to the preview content file reception of the receiving party (300) and the transmission process of the content files (IMCF) of this system will be explained.

In step S291, when the receiving party (300) receives the <predetermined part of the coded IMCF>, which coded the preview content files, through communication networks from the server for creating, transmitting and managing multimedia (200), in the step S292, it decodes and regenerates the <predetermined part of the coded IMCF>.

In step S293, the process is performed whether or not the user of the receiving party (300) wants to download the whole content files (IMCF). It is performed by the server for creating, transmitting and managing multimedia. (200) by receiving the selection signals generated from the receiving party (300) according to the selection of the user of the receiving party (300).

In step S293, if the answer of the receiving party (300) is "NO", the process is finished. If the answer is "YES", the next step S294 is performed, wherein the integrated central controlling/managing part (202) of the server for creating, transmitting and managing multimedia (200) receives the request for providing the whole content files (IMCF) from the receiving party (300).

In step S295, the integrated central controlling/processing part (202) (or server for exclusive use (201), if any) of the server for producing, transmitting and managing multimedia (200) provides data which have coded all of the IMCF to the receiving party (300) through communication networks.

Then, the receiving party (300) encodes the data, which have coded all of the IMCF, and regenerates the corresponding content files (IMCF) through the corresponding outputting device of the receiving party (300; non-illustrated) and display them. Thereby, the process is completed.

Some embodiments of the preview content files may include text information files (e.g., 610 of Fig. 6) and partial moving image information, may include only text information, or may include photo image files used for text information files and representative screen. The terminal (300) of the receiving party desirably has the same structure as the terminal (100) of the transmitting party. It could be one of the various terminals corresponding to one of the aforesaid grades in some embodiments.

### <Second embodiment>

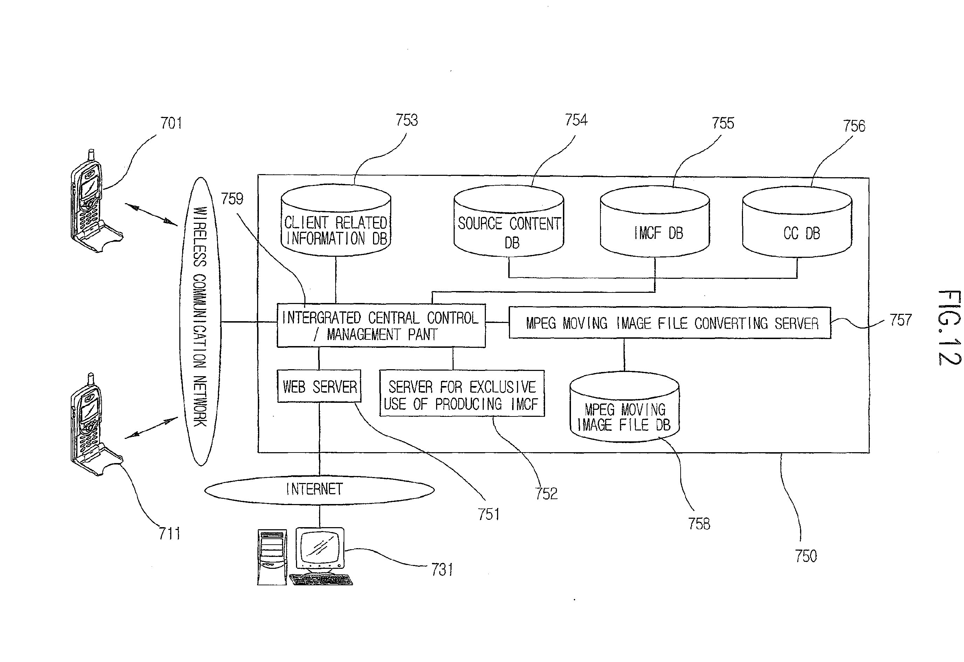

Hereinafter, we will explain the multimedia content service system according to the second embodiment of the present invention by referring to Fig. 12.

Specifically, we will explain the differences between the multimedia content service system (hereinafter "second system") according to the second embodiment of the present invention illustrated in Fig. 12 and the system (hereinafter "first system") according to the <first embodiment> according to the system illustrated in Figs. 1 and 4.

Among the parts illustrated in Fig. 12, the same terms as those in Figs. 1 and 4 have same structure and same work function, so the explanation thereof will be omitted.

In Fig. 12, reference numbers 701 and 711 are related to mobile communication terminal with multimedia content producing and transmitting service. Reference number 731 relates to a PC. Unlike Fig. 4, the server for managing multimedia service (750) in Fig. 12 further comprises a web server (751), an MPEG moving image file converting server (757), and an MPEG moving image file DB (758).

In the second system, after securing a text information file, a digital image file, audio or moving image and uploading them through wireless communication networks to be stored in the source content DB (754) in a mobile communication terminal (701), the user comes back home and through his/her own PC (e.g., PC (731)) can connect to the web server (751) of the server for multimedia producing, transmitting and managing (750) and can do necessary editing using the editing menu provided by the <second system> and can input data (for adding or for changing). Herein, multimedia source contents provided from the external multimedia producing companies are prepared, so the source content DB (754) is usually prepared in advance so that it can be provided according to the selection of the user.

In addition, for example, the mobile communication terminal (711) of the other party designated by the user of mobile communication terminal (701) (hereinafter "receiver") as a receiving terminal may be a kind, which supports moving image regeneration service. At this time, for example, the MPEG moving image file converting server (757) can convert the content files (IMCF) to MPEG method (e.g., MPEG-4), can create MPEG moving image files, can store them in MPEG moving image file DB (758) and transmit the corresponding MPEG moving image files to the receiver's terminal (711).

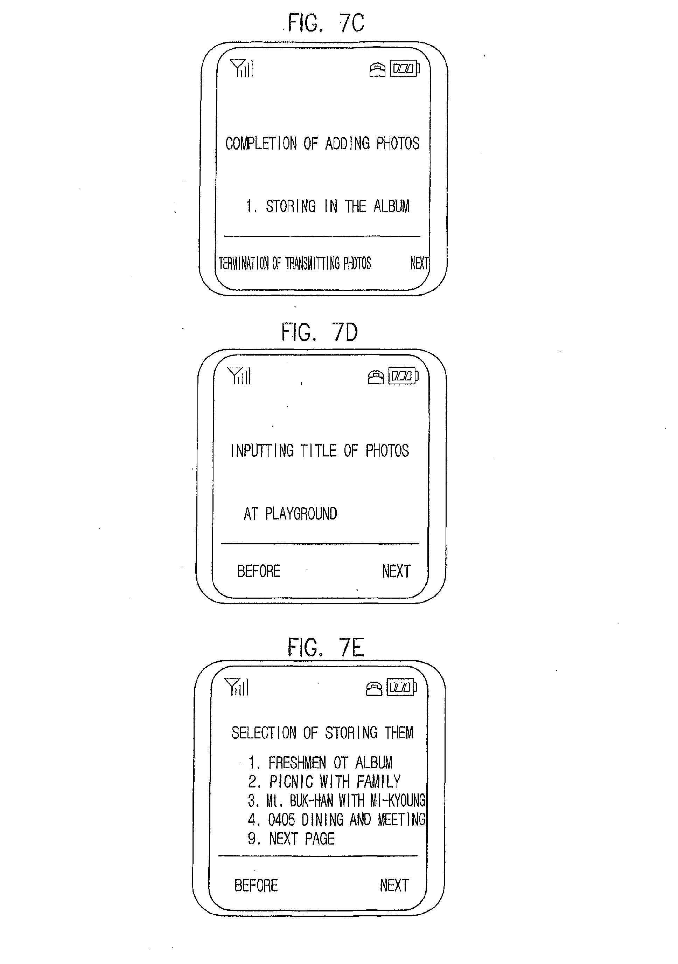

In addition, although Fig. 7 does not illustrate them, to be linked with the existing multimedia content service, the constitution of the MPEG4 moving image file converting server (757) can be improved or can be provided with more various DB linked with other DB which is constituted separately from the MPEG moving image file converting server (757) (e.g., moving image mail DB, live screen DB, moving image gallery DB), and provides a converting server which makes the SML multimedia service to be linked with it.

Thus, the second system can produce, edit, convert, transmit, receive and regenerate the multimedia content files of various types of formats corresponding to the various types of the terminals of the transmitting party and/or receiving party.

As explained above, according to the present invention, the user produces multimedia content files by himself/herself through the server for managing multimedia service and transmits them to another user. With terminal, the user can receive the multimedia contents by adjusting them to his/her terminal capacity, regenerate them and appreciate them. In particular, the multimedia content files can be produced by the transmitting party only with the simple form of a message (text file), and the receiving party provides the method and system for producing and transmitting multimedia content, which make the contents to be like moving images. Further, corresponding to the various types of terminals of the transmitting party and/or receiving party, various types of multimedia content files can be produced, edited, converted, transmitted, received and regenerated.

Overall, according to the present invention, the method and system of producing and transmitting multimedia contents can be realized, whereby the user can produce multimedia contents by himself/herself, and transmits them through wire/wirelss communication networks.

The present invention is specifically explained by the embodiment, but it is not only confined to the embodiments. Thus, alternation or improvement of the present invention is still possible within the ordinary knowledge scope of a person skilled in the art.

## Claims

**1.** A method of creating and transmitting multimedia contents which include a multimedia content producing/management Server which can be connected with transmitting and receiving terminals through wire or wireless communication networks, comprising the steps of:
a) providing at least one multimedia content (hereinafter "content") source;
b) attaching a designated code to the at least one source content provided by the step a);
c) providing a production option of for the content by a transmitting terminal;
d) creating construction controlling codes corresponding to the production option provided in the step c);
e) creating an integrated code by combining a source content designating code corresponding to the at least one source content of step b) with the constitution controlling code created by step d);
f) creating an integrated content according to the integrated code and storing it after encoding it;
g) checking a class of the receiving/regenerating capacity (RSC) of the receiving terminal, wherein the RSC of the receiving terminal is granted according to at least one Classification Standard, and the at least one Classification Standard comprises at least one among the receiving capability, regenerating capability and request level of the receiving terminal; and
h) transmitting the part of the integrated content which has been encoded according to the predetermined transmitting level and procedure of the checked RSC.

**2.** The method of creating and transmitting multimedia contents as claimed in claim 1, further comprising the steps of:
i) creating and encoding a preview content based on the content which has been created by the step f);
j) providing the preview content, which has been created by the step i) prior to the execution of the step h) to the receiving terminal; and
k) transmitting a pertinent part of the encoded content according to a grade of the receiving terminal.

**4.** The method of creating and transmitting multimedia contents as claimed in claim 1, wherein the at least one source content includes at least one among a text information file, a photo image file, an audio and a moving image file.

**5.** The method of creating and transmitting multimedia contents as claimed in claim 2, wherein the preview content file includes the text information file, some moving image information or photo image file used as text information file and representative screen.

**6.** The method of creating and transmitting multimedia contents as claimed in claim 1, further comprising the steps of:
l) receiving and regenerating a preview content file among a encoded integrated content files at receiving terminal;
m) determining whether or not to download the whole integrated content file (EvICF) from the receiving terminal based on a selection signal created by the receiving terminal; and
n) providing the whole integrated content file (IMCF) to the receiving terminal according to the determination of the step m).
